# EUROPÄISCHE PATENTSCHRIFT

(11) **EP 3 178 894 B1**
(45) Veröffentlichungstag und Bekanntmachung des Hinweises auf die Patenterteilung: **11.09.2019**
(21) Anmeldenummer: 16201905.3
(22) Anmeldetag: 02.12.2016
(51) Int. Cl.: C09J 7/38, E04B 1/68

(54) **VERWENDUNG EINES ABDICHTUNGSELEMENTS ZUR BAUWERKSABDICHTUNG**
USE OF A SEALING ELEMENT FOR SEALING CONSTRUCTIONS
UTILISATION D'ÉLÉMENT D'ÉTANCHÉITÉ POUR CONSTRUCTIONS

(30) Priorität: 07.12.2015 DE 102015121213
(43) Veröffentlichungstag der Anmeldung: 14.06.2017
(73) Patentinhaber: ankox GmbH, 71106 Magstadt (DE)
(72) Erfinder: Kogel, Andreas, 72108 Rottenburg a.N. (DE); Lindner, Edgar, 83661 Lenggries (DE)
(74) Vertreter: Mammel und Maser

(56) Entgegenhaltungen:
- EP-A1- 1 724 321
- WO-A1-00/39232
- WO-A1-03/104346
- WO-A1-2005/075544
- DE-U1-202011 000 107

## Beschreibung

Die vorliegende Erfindung betrifft ein klebendes flächiges Gebilde mit einer wasserquellbaren Komponente, das als Abdichtungselement zur Bauwerksabdichtung, die insbesondere im Hoch-, Tief-, Ingenieur-, Tunnel-, Straßen- und Wasserbau für die Abdichtung und den Schutz von erd- oder wasserberührten Bauteiloberflächen aller Art, wie beispielsweise Beton, gegen drückendes Wasser, gegen Bodenfeuchtigkeit und nicht drückendes Wasser einsetzbar ist.

Bei der Bauwerksabdichtung werden häufig Abdichtungselemente, die wasserquellbare Komponenten umfassen, eingesetzt. Die wasserquellbaren Komponenten quellen in Kontakt mit Wasser auf und füllen somit den abzudichtenden Raum vollständig aus. Es entsteht ein Quelldruck, so dass ein Durchtritt von Wasser verhindert wird.

Als wasserquellbare Komponenten werden beispielsweise quellbare Tone wie Bentonit oder quellbare Kunststoffe wie Superabsorber oder Polyacrylate eingesetzt.

Um ein vorzeitiges oder unkontrolliertes Quellen der quellbaren Komponenten zu vermeiden, das dazu führen kann, das bereits vormontierte Abdichtungselement wieder auszubauen und durch ein neues ungequollenes Abdichtungselement zu ersetzen, wurde vorgeschlagen, die wasserquellbaren Komponenten, wie in der EP 0 964 109 B1 oder EP 0 992 466 B1 beschrieben, mit einem wasserabweisenden und wasserunlöslichen Material zu ummanteln, das sich in alkalischer Umgebung auflöst.

Aus der DE 102 41 530 A1 ist bekannt, eine Bauwerksabdichtung in Form eines textilen zwei- oder dreidimensionalen Gebildes aus Fasern und/oder Bändern und quellfähigem Material herzustellen, wobei die Fasern oder Bänder von dem quellfähigen Material umhüllt sind und die Hohlräume der Gebilde im gequollenen Zustand vollständig mit stoffgebundenem Wasser gefüllt sind. Als quellfähige Materialien werden carboxylgruppenreiche Polymere verwendet, welche in einer Emulsion aus organischen Lösemitteln und Wasser auf Fasern oder Bändern aufgebracht werden.

Aus der EP 2 665 791 B1 und der DE 20 2011 000 107 U1 ist ein Abdichtungselement zur Bauwerksabdichtung bekannt, das ein Silylgruppen umfassendes Material und eine wasserquellbare Komponente als Dichtungsmaterial umfasst. Das Dichtungsmaterial kann als Formteil ausgehärtet sein oder auf ein Vlies als Träger aufgetragen sein. Bei diesem Abdichtungselement ist das Vlies mit dem Dichtungsmaterial getränkt, und es wird ein verzögertes Anquellen erreicht. Die dortige wasserquellbare Komponente ist vorzugsweise ein Polyacrylamid.

Das Abdichtungselement wird an dem Bauwerk aufgebracht, indem die Dichtungsmasse unmittelbar an dem Bauwerk anliegt. Der Träger, d.h. das Vlies, weist nach außen und dient als Schutz vor Beschädigungen der Dichtungsmasse. Das Abdichtungselement kann über einen Klebeanstrich oder mittels einer Dichtungsschlemme an dem Bauwerk vorfixiert werden, bis der Arbeitsraum verfüllt ist.

Die Volumenzunahme der Dichtungsmasse beträgt bei vollständiger Quellung etwa 50 bis 200 %. Die Hautbildung erfolgt nach ca. 10 Minuten, die Durchhärtung einer ca. 1,5 mm dicken Schicht ist in 24 Stunden erreicht, wobei die Schicht flexibel, also dehn- und biegbar, ist. Vor der Hautbildung ist die Dichtungsmasse klebrig.

Nachteilig an diesem Abdichtungselement ist jedoch, dass das Kiebevermögen mit der Hautbildung nachlässt.

Aus der WO 03/104346 ist eine Haftklebemasse für ein- oder beidseitig haftklebrige Klebefolienstreifen bekannt, welche sich durch dehnendes Verstrecken in der Verklebungsebene rückstands- und zerstörungfrei wieder ablösen lassen.

Die WO 2005/075544 A1 betrifft ein Verfahren zur Herstellung absorbierender Verbundstoffe durch in Kontakt bringen eines festen Trägermaterials mit einer Emulsion aus einem polymeren Material auf der Basis von Copolymeren der Acrylsäure, einem Superabsorber und einem Vernetzer. Die Emulsion wird auf einem Trägermaterial ausgehärtet.

Aus der EP 1 724 321 A1 ist ein lösungsmittelfreier pastöser Kleb- und Dichtstoff bekannt.

Die WO 00/39232 lehrt einen wasserquellbaren Schmelzkleber, der Tackifier, Superabsorber und Acrylate umfasst.

Die WO 03/104346 A1 lehrt Haftklebemassen, die sich durch dehnendes Verstrecken rückstands- und zerstörungsfrei wieder ablösen lassen.

Die Aufgabe der vorliegenden Erfindung besteht darin, ein Abdichtungselement zur Verwendung in der Bauwerksabdichtung bereit zu stellen, bei dem das Klebevermögen verbessert ist und das auch während des Quellens seine Klebrigkeit beibehält.

Diese Aufgabe wird durch die Merkmale des Anspruchs 1 gelöst.

Das erfindungsgemäße Abdichtungselement ist ein klebendes flächiges Gebilde, das auf beiden Seiten klebrig ist. Das Abdichtungselement umfasst einen Haftklebestoff und zwischen 2 und 50 Gew. % einer wasserquellbaren Komponente, wobei das klebende flächige Gebilde ein Acrylate, Tackifier und die wasserquellbare Komponente umfassendes Polymerisat ist. Die Klebrigkeit des Haftklebestoffs bewirkt, dass das flächige Gebilde an einer oder seinen beiden Seiten klebrig ist und auf den Beton aufgeklebt werden kann. Ebenso kann das Dichtelement auch im Stoßbereich von Abdichtungsbahnen, die an Betonbauwerken oder im Stoßbereich von Abdichtungselementen, die in Betonbauwerken zwischen zwei Betonierabschnitten angebracht sind, vorgesehen sein, um den Stoßbereich beziehungsweise Überlappungsbereich der zueinander benachbarten Abdichtungsbahnen und/oder -elementen zu überdecken und abzudichten oder dazwischenliegend abzudichten. Durch die wasserquellbare Komponente kann in Anwesenheit von Wasser das gewünschte Quellen erreicht werden.

Die Haftklebestoffe werden vorzugsweise aus der Gruppe der Polyacrylate, Polyalkylacrylate, Acrylatcopolymere, Carboxylsäure-Acrylester-Copolymere, wobei diese auch modifiziert sein können, ausgewählt,.

Vorzugsweise wird die wasserquellbare Komponente aus der Gruppe der Polyacrylamide, der Acrylamid umfassenden Copolymere, der Acrylsäure umfassenden Copolymere, der Acrylamid/Acrylsäure-Copolymer oder der carboxylgruppenreichen Polymere ausgewählt Weiterhin können als wasserquellbare Komponente auch granuläre superabsorbierende Polymere auf der Basis von teilneutralisierten vernetzten Polyacrylsäuren eingesetzt werden. Auch der Einsatz von Bentonit oder Metallhydroxiden wie Calciumhydroxid als wasserquellbare Komponente ist möglich.

Das klebende flächige Gebilde ist ein Acrylate, Tackifier und die wasserquellbare Komponente umfassendes Polymerisat. Besonders bevorzugt ist das klebende flächige Gebilde aus einem mit der wasserquellbaren Komponente modifizierten Copolymer aus Alkylacrylaten, Tackifieren, ggf. Acrylsäure und Vernetzern.

Die Tackifier sind Verbindungen, die dazu dienen, die Klebrigkeit zu erhöhen. Die Tackifier werden aus der Gruppe der Harze ausgewählt und sind vorzugsweise Kolophoniumharze oder deren Derivate, Terpene oder modifizierte Terpene, aliphatische, cycloaliphatische oder aromatische Harze (C5-afiphatische Harze, C9-aromatische Harze, C5/C9-aliphatisch/aromatische Harze, hydrierte Kohlenwasserstoffharze und deren Mischungen) oder auch Terpen-Phenol-Harze.

Besonders bevorzugt wird als Tackifier das partiell hydrierte inerte thermoplastische Harz, das von der Firma Eastman Chemical Middelburg B.V unter der Bezeichnung Regalite R7100 vertrieben wird, eingesetzt.

Als wasserquellbare Komponente besonders bevorzugt ist das wasserquellbare Material Acrylamid/Acrylsäure-Copolymer, vernetzt, als Natriumsalz. Dieses wasserquellbare Material ist im Wesentlichen unlöslich in Wasser und weist einen pH-Wert von 6,75 auf.

Auch der Einsatz von carboxylgruppenreichen Polymeren, die vorzugsweise allylische oder vinylische ungesättigte Carbonsäuren oder deren Derivate, beispielsweise deren Ester, Amide oder Nitrile sowie Anhydride, mit untergeordneten Anteilen anderer Comonomere, allylische oder vinylische ungesättigte Mono- oder Dicarbonsäuren, sind als wasserquellbare Komponente möglich. Bevorzugt sind dabei vinylisch ungesättigte Mono- oder Dicarbonsäuren wie u.a. Acrylsäure und/oder Methacrylsäure sowie Maleinsäure, Fumarsäure oder Itaconsäure bzw. deren Ester, Amide, Nitrile oder Anhydride. Bevorzugte Hauptmonomere sind Acrylsäure sowie Methacrylsäure, wobei Arylsäure besonders empfehlenswert ist.

Der Anteil dieser Hauptmonomeren am gesamten carboxylgruppenreichen Polymer liegt vorzugsweise im Bereich von 60 Gew.% bis 99,9 Gew.%, insbesondere bei 70 Gew.% bis 99 Gew.%.

Die carboxylgruppenreichen Polymere können eine oder mehrere der nachstehenden Comonomere enthalten:
Estern aus vorzugsweise 3 bis 6 C-Atomen aufweisenden a, βmonoethylenisch ungesättigten Mono- oder Dicarbonsäuren, wie Acrylsäure, Methacrylsäure, Maleinsäure, Fumarsäure und Itaconsäure mit C₁-C₁₂-, vorzugsweise C₁-C₈-Alkanolen. Derartige Ester sind insbesondere Methyl-, Ethyl-, n-Butyl-, Isobutyl-, tert-Butyl-, n-Pentyl-, isoPentyl- und 2-Ethyihexylacrylat und/oder -methacrylat; Acrylnitril, Methacrylnitril; Acrylamiden und alkylsubstituierten Acrylamiden, wie z. B. Acrylamid, methacrylamid, N,N-Dimethylacrylamid, N-Methylolmethacrylamid, N-tert.-Butylacrylamid, N-Methylmethacrylamid, Methylenbisacrylamid und Mischungen davon;
Sulfogruppenhaltige Monomere, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalze bzw. deren Mischungen sowie Sulfopropylacrylat und/oder Sulfopropylmethacrylat;
C₁-C₄-Hydroxyalkylestern von C₃-C₆-Mono- oder Dicarbonsäuren, insbesondere der Acrylsäure, Methacrylsäure oder Maleinsäure, oder deren mit 2 bis 50 Mol Ethylenoxid, Prophylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten C₁-C₁₈-Alkoholen mit den erwähnten Säuren, wie z. B. Hydroxyethylacrylat, Hydroxyethylmethacrylat, Hydroxypropylacrylat, Hydroxypropylmethacrylat, (Butandio-I,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen;
Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylatchlorid, 3-(N,N-Dimethyl-amino)-propyl(meth)acrylat, 2-Dimethylaminoethyl(meth)acrylamid, 3-Dimethylaminopropyl(meth)acrylamid, 3-Trimethylammoniumpropyl(meth)acrylamid-chlorid und Mischungen davon;
1,3-Diketogruppen enthaltenden Monomeren, wie z. B. Acetoacetoxyethyl(meth)acrylat oder Diacetonacrylamid, harnstoffgruppenhaltigen Monomeren, wie Ureidoethyf(meth)acrylat, Acrylamidoglykolsäure, Methacrylamidoglykolatmethylether;
Silylgruppen enthaltenden Monomeren, wie z. B. Trimethoxysilylpropylmethacrylat.

Um das gewünschte Quellen in Anwesenheit von Wasser/Feuchtigkeit zu erreichen, weist das Abdichtungselement zwischen 2 Gew. % und 50 Gew.%, vorzugsweise zwischen 5 und 20 Gew.% und besonders bevorzugt zwischen 8 Gew.% und 12 Gew.% der wasserquellbaren Komponente auf.

Das mit der wasserquellbaren Komponente modifizierte Polyacrylat kann wie folgt hergestellt werden:
Zunächst wird ein Prepolymer, vorzugsweise ein Prepolymeracrylat, hergestellt. Das Ausgangsgemisch zur Herstellung des Prepolymeracrylats besteht zu einem Großteil aus Alkylacrylaten wie 2-Ethylhexylacrylat, Butyl-, Lauryl-, Isooctylacrylat, vorzugsweise wenigstens 50 Gew.%, besonders bevorzugt wenigstens 80 Gew.% sowie Acrylsäure, vorzugsweise zwischen 2 und 10 Gew.%. Zudem kann das Ausgangsgemisch ggfs. weitere Acrylate wie Isobornylacrylat, vorzugsweise etwa 10 Gew.%, sowie geringe Mengen eines Photoinitiators umfassen. Das Prepolymer wird vorzugsweise unter UV-Bestrahlung hergestellt.

Anschließend wird das Prepolymer mit den Tackifiern, insbesondere den Kohlenwasserstoff- oder anderen Harzen wie Kolophoniumharzen , der wasserquellbaren Komponente, insbesondere den Acrylamid/Acrylsäure-Copolymeren, und Vernetzern wie Diacrylaten oder mehrfach funktionellen Acrylaten und Photoinitiatoren, aufgerakelt, mit einer Trägerfolie beschichtet und dann unter UV-Bestrahlung ausgehärtet.

Das erhaltene flächige Gebilde ist auf beiden Seiten klebrig, eine Bandseite ist mit der Trägerfolie beschichtet, so dass es nun zu einer Rolle aufgewickelt werden kann.

Ein besonders bevorzugtes klebendes flächiges Gebilde ist das Polymerisat eines Gemischs von zwischen 5 Gew. % und 15 Gew.% der wasserquellbaren Komponente, zwischen 5 Gew.% und 25 Gew.% Tackifiern, 30-70 Gew.% Acrylatprepolymer, 0,1 bis 2 Gew.% UV-Initiator und zwischen 0,01 und 1 Gew.% Vernetzer,

Vorzugsweise beträgt der Anteil an Haftklebestoffen in dem Abdichtungselement mehr als 50 Gew. %, vorzugsweise mehr als 70 Gew.% und besonders bevorzugt mehr als 80 Gew. % und der Anteil der Summe von Haftklebestoffen und wasserquellbarer Komponente in dem Abdichtungselement wenigstens 70 Gew.%, vorzugsweise wenigstens 80 Gew.% und besonders bevorzugt mehr als 90 Gew.%.

Wenn Wasser an das Abdichtungselement gelangt, so fängt dieses zeitverzögert an, zu quellen. Es wird vermutet, dass das Wasser mit einer gewissen zeitlichen Verzögerung durch die von der Acrylsäure herrührende Kapillarwirkung an die wasserquellbare Komponente gelangt. Die Klebewirkung des Haftklebestoffs ist auch in Anwesenheit von Wasser so gut, dass das Abdichtungselement nicht während des - verzögerten - Quellens von der Bauteiloberfläche herunter fällt oder sich löst.

Damit wird eine im Vergleich zum Stand der Technik verbesserte Verklebung der Bauteiloberfläche bzw. Abdichtungsstelle erreicht, die auch während des Quellvorgangs anhält

Dadurch, dass das Material des Abdichtungselements selbst klebrig ist, kann der aus dem Stand der Technik bekannte Schritt des Beschichtens mit einem Haftvermittler entfallen.

Das klebende flächige Gebilde weist eine gewisse Dehnbarkeit bzw. Elastizität auf. In Anwesenheit von Wasser quillt die wasserquellbare Komponente in dem flächigen Gebilde und aufgrund der Dehnbarkeit weitet sich das gesamte flächige Gebilde auf und füllt somit den abzudichtenden Raum vollständig aus.

Die beiden klebenden Seiten des Abdichtungselements sind vorzugweise mit einer Kunststofffolie, einem Liner, abgedeckt, die vorzugsweise silikonisiert ist.

Die Folie kann beispielsweise aus Polyester, Polyolefinen oder Polyvinylchlorid oder anderen halogenierten Polyolefinen und/oder Alkenylhalogen-Polymeren oder -Copolymeren sein. Bevorzugte Polyester sind beispielsweise Terephthalate, insbesondere Polyethylenterephthaltat (PET).

Wesentlich ist, dass die Klebewirkung des Haftvermittlers auch in Anwesenheit von Wasser und während des Quellvorgangs fortbesteht und somit die Klebewirkung nicht bei beginnendem Quellen versagt.

Das erfindungsgemäße Abdichtelement ist vorzugsweise transparent oder translucent und kein Textilband oder Vlies und besteht nicht aus Fasern. Es ist bandförmig, formbeständig und weist eine gewisse Dehnbarkeit und Elastizität auf, die auch erforderlich ist, um ein Quellen der in dem Bandmaterial enthaltenen wasserquellbaren Komponenten zu ermöglichen. Die polymerisierte Masse aus dem Haftklebestoff und der wasserquellenden Komponente ist klebrig und bandförmig und behält die Form und die Klebrigkeit bei.

Die wasserquellbare Komponente befindet sich im Gegensatz zum Stand der Technik weder auf der Oberfläche von Fasern oder Bändern, noch in einer hochviskosen Dichtungsmasse, sondern in dem Haftklebestoff selbst, und ist in diesem statistisch verteilt.

Ein zusätzliches Trägermaterial wie ein Vlies oder ein Textil, das dazu dient, der Dichtungsmasse wie in der EP 2 665 791 B1 beschrieben, handhabbar zu machen, ist nicht erforderlich, da das flächige Gebilde selbst handhabbar ist.

In dem Haftklebestoff des flächigen Gebildes können auch weitere Bestandteile eingebettet sein, zum Beispiel auch Zement und/oder Füllstoffe wie beispielsweise XYPEX® erhältlich bei Fullstop Technology LTD. Dieser Füllstoff kann zu einer zusätzlichen Abdichtung durch Kristallisation beitragen. Dabei werden Poren und Kapillare im Beton blockiert und Mikrorisse versiegelt. Auch kann der Haftklebestoff des flächigen Gebildes eingefärbt sein oder Indikatorsubstanzen aufweisen, die z.B. bei Anwesenheit von Wasser oder einem bestimmten pH-Wert einen Farbumschlag bewirken.

Das erfindungsgemäße Abdichtungselement ist (ohne die Folie zur Abdeckung der Klebeflächen) zwischen 0,4 und 5 mm, vorzugsweise zwischen 0,6 und 1,2 mm dick und besonders bevorzugt etwa 0,8 mm dick.

Zumindest auf einer der beiden Seiten der Klebeflächen des flächigen Gebildes ist ein vorzugsweise abziehbares Abdeckmaterial, insbesondere Schutzfolie, vorgesehen, um die Klebeflächen zu schützen und ein vorzeitiges Ankleben zu verhindern.

Vorzugsweise wird das Abdichtungselement aufgerollt auf einer Rolle angeboten, so dass nur eine Schutzfolie in der Größe der Fläche des Abdichtungselements erforderlich ist, die - gerollt - jeweils an ihrer Ober- und ihrer Unterseite als Abdeckung wirkt.

Zudem kann das erfindungsgemäße Abdichtungselement auf ein band- oder streifenförmiges Trägerelement aufgeklebt werden. Das mit dem Abdichtungselement beschichtete band- oder streifenförmige Trägerelement kann als Fugenabdichtungselement ausgebildet sein. Dieses Fugenabdichtungselement nimmt das streifenförmige erfindungsgemäße Abdichtungselement auf und wird zum Abdichten von Arbeitsfugen, die zwischen zwei Betonierabschnitten entstehen, eingesetzt. Die dem Trägerelement gegenüberliegende Seite des Abdichtungselements ist bevorzugt mit einer Kunststofffolie als Schutzfolie versehen, die vor dem Betonieren abgezogen wird.

Das Fugenabdichtungselement wird vor dem Betonieren des ersten Betonierabschnitts mittels Haltelaschen, Halteclips oder Draht, die am Trägerelement angreifen, an der Bewehrung befestigt. Nach dem Einbringen des ersten und zweiten Betonierabschnitts erstreckt sich das Fugenabdichtungselement entlang der zwischen dem ersten und zweiten Betonierabschnitt gebildeten Fuge. Die Verklebung des Abdichtungselements mit dem Beton erfolgt in Folge der Aushärtung des Betons.

Das Trägerelement des Fugenabdichtungselementes, an welchem das erfindungsgemäße Abdichtungselement angebracht ist, kann als ein unbehandeltes Blech, ein verzinktes Blech oder als Schwarzblech ausgebildet sein. Alternativ kann auch ein thermoplastischer oder duroplastischer Kunststoff zur Bildung eines band- oder streifenförmigen Trägerelementes vorgesehen sein.

Das Abdichtungselement zur Bauwerksabdichtung kann auch für ein Frischbeton-Verbundelement vorgesehen sein. Ein solches Frischbeton-Verbundelement besteht aus einem bahnförmigen flächigen Träger, wie beispielsweise einer Kunststofffolie, einem Vlies, einem Filz oder einem textilen Gewebe. Auf einer Oberfläche des bahnförmigen flächigen Trägers ist das Abdichtungselement durch den Haftklebstoff verbunden. Beispielsweise kann ein solches Frischbeton-Verbundelement mit dem Träger zum Erdreich weisend positioniert sein und anschließend auf das Abdichtungselement ein frischer Beton eingebracht werden, so dass der Beton dieses Frischbeton-Verbundelement gegen das Erdreich drückt. Mit zunehmendem Aushärten des Betons erfolgt eine Verklebung des Abdichtungselements mit dem Beton. Auch kann das Frischbeton-Verbundelement in einer Ausrichtung eingebracht werden, in der das Abdichtungselement zum Erdreich weist und der frische Beton auf dem Träger aufgebracht wird. Insbesondere bei aus Vliesen bestehenden Trägern kann der Beton sich mit dem Vlies verkrallen. Auch kann an fertigen Betonbauteilen ein solches Frischbeton-Verbundelement mit dem Abdichtungselement an dem Betonbauteil anhaftend vorgesehen sein.

Des Weiteren kann bevorzugt bei Abdichtungen, die überlappend angeordnet sind, um große Flächen an Betonbauwerken abzudichten, im Überlappungsbereich von zwei überlappend angeordneten Abdichtungen ein erfindungsgemäßes Abdichtungselement angeordnet sein. Beispielsweise kann bei zwei unbeschichteten Trägerelementen als Fugenabdichtungselement ein Abdichtungselement nur im Stoßbereich zwischen den beiden aufeinanderfolgenden Fugenabdichtungselementen vorgesehen sein, wodurch der Stoßbereich beziehungsweise der Überlappungsbereich der Fugenabdichtungselemente durch das Abdichtungselement abgedichtet wird.

## Patentansprüche

1. Verwendung eines Abdichtungselements zur Bauwerksabdichtung, wobei das Abdichtungselement ein klebendes flächiges Gebilde ist, das auf beiden Seiten klebrig ist und das Abdichtungselement einen Haftklebestoff und eine wasserquellbare Komponente umfasst und der Anteil der wasserquellbaren Komponente in dem Abdichtungselement zwischen 2 Gew.% und 50 Gew.% beträgt und das klebende flächige Gebilde ein Acrylate, Tackifier und die wasserquellbare Komponente umfassendes Polymerisat ist.

2. Verwendung nach Anspruch 1, **dadurch gekennzeichnet, dass** der Haftklebestoff aus der Gruppe der Polyacrylate, der Polyalkylacrylate, der Acrylatcopolymere oder der Carboxylsäure-Acrylester-Copolymere, auch modifiziert, ausgewählt wird.

3. Verwendung nach einem der vorangegangenen Ansprüche, **dadurch gekennzeichnet, dass** die wasserquellbare Komponente aus der Gruppe der Polyacrylamide, der Acrylamid umfassenden Copolymere, der Acrylsäure umfassenden Copolymere, der carboxygruppenreichen Polymere der Acrylamid/Acrylsäure-Copolymere, der granulären superabsorbierenden Polymere, der Bentonite oder Metallhydroxide ausgewählt wird.

4. Verwendung nach einem der vorangegangenen Ansprüche, **dadurch gekennzeichnet, dass** das klebende flächige Gebilde ein mit der wasserquellbaren Komponente modifiziertes Copolymer aus Alkylacrylaten, Tackifieren, ggf. Acrylsäure und Vernetzern ist.

5. Verwendung nach Anspruch 4, **dadurch gekennzeichnet, dass** die Tackifier aus der Gruppe der Harze und der Kohlenwasserstoffharze auswählt werden.

6. Verwendung nach einem der vorangegangenen Ansprüche, **dadurch gekennzeichnet, dass** der Anteil an Haftklebestoffen in dem Abdichtungselement mehr als 50 Gew.%, vorzugsweise mehr als 70 Gew. % und besonders bevorzugt mehr als 80 Gew. % beträgt.

7. Verwendung nach einem der vorangegangenen Ansprüche, **dadurch gekennzeichnet, dass** zumindest eine klebende Seite des flächigen Gebildes mit einer insbesondere abziehbaren Kunststofffolie versehen ist, die vorzugsweise aus Polyester, Polyolefinen oder Polyvinylchlorid besteht, wobei die Polyester vorzugsweise Terephthalate, insbesondere Polyethylenterephthaltat (PET), sind.

8. Verwendung nach einem der vorangegangenen Ansprüche, **dadurch gekennzeichnet, dass** die wasserquellbare Komponente in dem Haftklebstoff statistisch verteilt ist.

9. Verwendung nach einem der vorangegangenen Ansprüche, **dadurch gekennzeichnet, dass** das Abdichtungselement auf ein band- oder streifenförmiges Trägerelement aufgeklebt ist.

10. Verwendung nach Anspruch 9, **dadurch gekennzeichnet, dass** das auf dem band- oder streifenförmigen Trägerelement aufgeklebte Abdichtungselement auf seiner anderen Seite mit einer abziehbaren Schutzfolie versehen ist.

11. Verwendung nach Anspruch 9 oder 10, **dadurch gekennzeichnet, dass** das band- oder streifenförmige Trägerelement aus unbehandeltem Blech, einem verzinkten Blech, einem Schwarzblech, einem thermoplastischen oder duroplastischen Kunststoff besteht.

12. Verwendung nach Anspruch 9, **dadurch gekennzeichnet, dass** das band- oder streifenförmige Trägerelement eine Kunststofffolie, ein Vlies, Filz oder ein textiles Gewebe ist und das auf dem Trägerelement aufgeklebte Abdichtungselement insbesondere als Frischbeton-Verbundelement verwendet wird.

13. Verwendung eines Abdichtungselements nach einem der Ansprüche 1 bis 12 zum Abdichten von Bauteiloberflächen und/oder von Arbeitsfugen zwischen zwei Betonierabschnitten, vorzugsweise gegen drückendes Wasser, gegen Bodenfeuchtigkeit und nicht drückendes Wasser.

14. Verfahren zur Herstellung eines klebenden flächigen Gebildes als Abdichtungselements für die Bauwerksabdichtung nach einem der Ansprüche 1 bis 13, **dadurch gekennzeichnet, dass** ein Prepolymeracrylat mit Tackifieren, der wasserquellbaren Komponente und Vernetzern polymerisiert wird.

15. Verfahren nach Anspruch 14, **dadurch gekennzeichnet, dass** das Prepolymeracrylat aus einem Alkylacrylate und Acrylsäure umfassenden Gemisch hergestellt wird, wobei der Anteil an Alkylacrylaten in dem Prepolymeracrylat vorzugsweise wenigstens 50 Gew. % und der Anteil an Acrylsäure vorzugsweise zwischen 2 und 10 Gew. % beträgt.

## Claims

1. Use of a sealing element for structural waterproofing, wherein the sealing element is an adhesive planar structure which is sticky on both sides and the sealing element comprises a pressure-sensitive adhesive and a water-swellable component and the proportion of the water-swellable component in the sealing element is between 2 wt.% and 50 wt.% and the adhesive planar structure is a polymer comprising acrylates, tackifiers and the water-swellable component.

2. The use according to claim 1, **characterised in that** the pressure-sensitive adhesive is selected from the group of the polyacrylates, the polyalkyl acrylates, the acrylate copolymers or the carboxylic acid-acrylic ester copolymers, including modified ones.

3. The use according to one of the preceding claims, **characterised in that** the water-swellable component is selected from the group of the polyacrylamides, the copolymers comprising acrylamide, the copolymers comprising acrylic acid, the carboxyl-group-rich polymers, the acrylamide/acrylic acid copolymers, the granular superabsorbent polymers, the bentonites or metal hydroxides.

4. The use according to one of the preceding claims, **characterised in that** the adhesive planar structure is a copolymer of alkyl acrylates, tackifiers, optionally acrylic acid and crosslinking agents, said copolymer being modified with the water-swellable component.

5. The use according to claim 4, **characterised in that** the tackifiers are selected from the group of the resins and the hydrocarbon resins.

6. The use according to one of the preceding claims, **characterised in that** the proportion of pressure-sensitive adhesives in the sealing element is more than 50 wt.%, preferably more than 70 wt.% and particularly preferably more than 80 wt.%.

7. The use according to one of the preceding claims, **characterised in that** at least one adhesive side of the planar structure is provided with a plastic film that is in particular peelable and that preferably consists of polyester, polyolefins or polyvinyl chloride, wherein the polyesters are preferably terephthalates, in particular polyethylene terephthalate (PET).

8. The use according to one of the preceding claims, **characterised in that** the water-swellable component is statistically distributed in the pressure-sensitive adhesive.

9. The use according to one of the preceding claims, **characterised in that** the sealing element is stuck on to a tape- or strip-like support element.

10. The use according to claim 9, **characterised in that** the sealing element stuck on the tape- or strip-like support element is provided on its other side with a peelable protective film.

11. The use according to claim 9 or 10, **characterised in that** the tape- or strip-like support element consists of untreated sheet metal, a galvanised sheet metal, a blackplate, or a thermoplastic or thermoset polymer.

12. The use according to claim 9, **characterised in that** the tape- or strip-like support element is a plastic film, a nonwoven material, felt or a textile fabric, and the sealing element stuck on the support element is used in particular as a fresh concrete composite element.

13. The use of a sealing element according to one of claims 1 to 12 for sealing component surfaces and/or construction joints between two concreting sections, preferably against pressing water and against ground moisture and non-pressing water.

14. A method of producing an adhesive planar structure as a sealing element for structural waterproofing according to one of claims 1 to 13, **characterised in that** a prepolymer acrylate is polymerised with tackifiers, the water-swellable component and crosslinking agents.

15. The method according to claim 14, **characterised in that** the prepolymer acrylate is made from a mixture comprising alkyl acrylates and acrylic acid, wherein the proportion of alkyl acrylates in the prepolymer acrylate is preferably at least 50 wt. % and the proportion of acrylic acid is preferably between 2 and 10 wt.%.

## Revendications

1. Utilisation d'un élément d'étanchéité pour l'étanchéification de constructions, l'élément d'étanchéité étant une structure plane adhésive, qui est collante des deux côtés et l'élément d'étanchéité comprenant un adhésif sensible à la pression et un composant gonflable à l'eau et la teneur du composant gonflable à l'eau dans l'élément d'étanchéité étant comprise entre 2 % en poids et 50 % en poids et la structure plane adhésive étant un polymérisât comprenant des acrylates, des agents poisseux et le composant gonflable à l'eau.

2. Utilisation selon la revendication 1, **caractérisée en ce que** l'adhésif sensible à la pression est choisi parmi le groupe des polyacrylates, des polyacrylates d'alkyle, des copolymères d'acrylates ou des copolymères d'acide carboxylique et d'acrylester, également modifiés.

3. Utilisation selon l'une des revendications précédentes, **caractérisée en ce que** le composant gonflable à l'eau est choisi parmi le groupe des polyacrylamides, des copolymères comprenant de l'acrylamide, des copolymères comprenant de l'acide acrylique, des polymères riches en groupes carboxyles des copolymères d'acrylamide et d'acide acrylique, des polymères superabsorbants granuleux, de la bentonite ou des hydroxydes de métal.

4. Utilisation selon l'une des revendications précédentes, **caractérisée en ce que** la structure plane adhésive est un copolymère constitué d'acrylates d'alkyle, d'agents poisseux, le cas échéant d'acide acrylique et d'agents de réticulation, modifié par le composant gonflable à l'eau.

5. Utilisation selon la revendication 4, **caractérisée en ce que** les agents poisseux sont choisis parmi le groupe des résines et des résines hydrocarbonées.

6. Utilisation selon l'une des revendications précédentes, **caractérisée en ce que** la teneur d'adhésif sensible à la pression dans l'élément d'étanchéité est supérieure à 50 % en poids, de préférence supérieure à 70 % en poids et de manière particulièrement préférée supérieure à 80 % en poids.

7. Utilisation selon l'une des revendications précédentes, **caractérisée en ce qu'**au moins un côté adhésif de la structure plane est pourvu d'une feuille en matière plastique en particulier pelable, qui consiste de préférence en du polyester, en du polyoléfine ou en du polychlorure de vinyle, les polyesters étant de préférence des téréphtalates, en particulier du polytéréphtalate d'éthylène (PET) .

8. Utilisation selon l'une des revendications précédentes, **caractérisée en ce que** le composant gonflable à l'eau est réparti aléatoirement dans l'adhésif sensible à la pression.

9. Utilisation selon l'une des revendications précédentes, **caractérisée en ce que** l'élément d'étanchéité est collé sur un élément de support en forme de ruban ou de bande.

10. Utilisation selon la revendication 9, **caractérisée en ce que** l'élément d'étanchéité collé sur l'élément de support en forme de ruban ou de bande est pourvu sur son autre côté d'une feuille de protection pelable.

11. Utilisation selon la revendication 9 ou 10, **caractérisée en ce que** l'élément de support en forme de ruban ou de bande consiste en du tôle non traitée, en une tôle zinguée, en une tôle noire, en une matière synthétique thermoplastique ou thermodurcissable.

12. Utilisation selon la revendication 9, **caractérisée en ce que** l'élément de support en forme de ruban ou de bande est une feuille de matière plastique, un non-tissé, du feutre ou un tissu textile et l'élément d'étanchéité collé sur l'élément de support est utilisé en particulier comme élément de liaison au béton frais.

13. Utilisation d'un élément d'étanchéité selon l'une des revendications 1 à 12 pour l'étanchéification de surfaces d'éléments structuraux et/ou de joints de reprise entre deux sections de bétonnage, de préférence contre l'eau exerçant une pression, contre l'humidité du sol et contre l'eau n'exerçant pas de pression.

14. Procédé de fabrication d'une structure plane adhésive comme élément d'étanchéité pour l'étanchéification de constructions selon l'une des revendications 1 à 13, **caractérisé en ce qu'**un acrylate prépolymère est polymérisé avec des agents poisseux, le composant gonflable à l'eau et des agents de réticulation.

15. Procédé selon la revendication 14, **caractérisé en ce que** l'acrylate prépolymère est fabriqué à partir d'un mélange comprenant des acrylates d'alkyle et de l'acide acrylique, la teneur d'acrylates d'alkyle dans l'acrylate prépolymère étant de préférence d'au moins 50 % en poids et la teneur d'acide acrylique étant de préférence comprise entre 2 et 10 % en poids.
